# EUROPEAN PATENT APPLICATION

(11) **EP 4 583 263 A1**
(43) Date of publication of application: **09.07.2025**
(21) Application number: 24220792.6
(22) Date of filing: 17.12.2024
(51) Int. Cl.: H01M 50/103, H01M 50/119, H01M 50/133, H01M 50/15, H01M 50/159, H01M 50/169

(54) **BATTERY CELL, BATTERY CELL CASE, AND MANUFACTURING METHOD THEREOF**

(30) Priority: 08.01.2024 KR 20240003175
(71) Applicant: SK On Co., Ltd., Seoul 03161 (KR)
(72) Inventor: CHEONG, Hoemin, 34124 Daejeon (KR)
(74) Representative: Bird & Bird LLP

(57) **Abstract**

In an embodiment, a battery cell may include: a case including a first open region, a second open region facing each other, at least one step region connected to at least one of the first open region or the second open region, and a receiving region connected to the at least one step region; and an electrode assembly disposed in the receiving region, and including a positive electrode plate, a negative electrode plate, and a separator; a plurality of cap plates covering the first open region and the second open region; at least one step welding region formed in the at least one step region; and a main welding region connected to the at least one step welding region and formed in the receiving region. The receiving region has a first thickness greater than a second thickness of the at least one step region.

## Description

### TECHNICAL FIELD

The disclosed technology relates to a battery cell, a battery cell case and a manufacturing method thereof.

### BACKGROUND

Batteries are widely used in small electronic devices such as mobile phones and laptop computers, as well as medium and large mechanical devices such as electric vehicles (EV). Secondary batteries offer the advantage of being rechargeable and reusable.

### SUMMARY

The disclosed technology can be implemented in some embodiments to provide a battery cell and a battery cell case with improved quality.

Additionally, according to an aspect of the disclosed technology can be implemented in some embodiments to provide a battery cell and a battery cell case with improved manufacturing efficiency and improved welding quality.

Additionally, the disclosed technology can be implemented in some embodiments to provide a manufacturing method for a battery case of with improved welding efficiency.

Additionally, the disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) and hybrid vehicles as alternatives to vehicles using fossil fuel-based engines and by providing battery-based energy storage systems (ESSs) to store renewable energy such as solar power and wind power.

In some embodiments of the disclosed technology, a battery cell may include: a case including a first open region, a second open region facing the first open region, at least one step region connected to at least one of the first open region or the second open region, and a receiving region connected to the at least one step region; and an electrode assembly disposed in the receiving region, and including: a positive electrode plate, a negative electrode plate, and a separator; a plurality of cap plates covering the first open region and the second open region; at least one step welding region formed in the step region; and a main welding region connected to the at least one step welding region and formed in the receiving region. The receiving region has a first thickness and the at least one step region has a second thickness, and the first thickness is greater than the second thickness. In an implementation, the separator may be disposed between the positive electrode plate and the negative electrode plate.

In an embodiment, the case may be formed by bending a single plate formed of a metal material, and one end of the single plate is in contact and another end of the single plate and welded together in the at least one step welding region and the main welding region.

In an embodiment, the at least one step welding region and the main welding region may be formed on one surface of a plurality of surfaces of the case.

In an embodiment, the plurality of cap plates may include: a first cap plate, covering the first open region; and a second cap plate, covering the second open region, and the at least one step region may include: a first step region connected to the first open region and extending from the first open region to a predetermined section in a direction toward the electrode assembly; and a second step region connected to the second open region and extending from the second open region to the predetermined section in the direction toward the electrode assembly.

In an embodiment, the at least one step welding region may include: a first step welding region formed in the first step region; and a second step welding region formed in the second step region, and the main welding region may be connected to the first step welding region and the second step welding region, and may be disposed between the first step welding region and the second step welding region.

In an embodiment, at least one back bead formed in the at least one step welding region may protrude in an extension line extending from an inner surface of the case in the receiving region toward the at least one step region, and a protrusion height of the at least one back bead may be greater than 0 um and less than or equal to 90 µm.

In an embodiment, at least one of the at least one step welding region and the main welding region may be welded using a laser.

In an embodiment, the second thickness may be at least 80% and less than 100% of the first thickness, and a length of the at least one step region measured in a direction extending from an end of the case to the electrode assembly may be at least 200% and at most 400% of the first thickness.

In an embodiment, the at least one step welding region may include a plurality of step welding regions, and the plurality of step welding regions may include a plurality of back beads formed in the plurality of step welding regions and a main welding region disposed between the plurality of step welding regions, and the plurality of back beads may have a shape inverted with respect to the main welding region.

In an embodiment, the plurality of back beads may include a bead pattern formed by melting the case, and the bead pattern may be formed in a region excluding an end of the case, in the plurality of step welding regions.

In an embodiment, the plurality of back beads may protrude in an extension line in which an inner surface of the case in the receiving region extends toward the step region.

In some embodiments of the disclosed technology, a manufacturing method for a battery cell case may involve welding connection regions of ends of a plate formed of a metal material and may include: performing a first welding by ( e.g., one-side sub-welding operation) by irradiating a laser with a first heat input to a first region having a predetermined length in a first direction from a first end of the plate toward a second end of the plate opposite to the first end of the metal plate; performing a second welding

(e.g., other-side sub-welding operation) by irradiating a laser with a second heat input to a second region having a predetermined length in a second direction from the second end of the plate to the first end of the plate; and performing a third welding by (e.g., main welding operation) by irradiating a laser with a third heat input to a connection region configured to connect the first and second ends of the metal plate and having a thickness greater than a thickness of the first end and a thickness of the second end. Here, performing the first welding includes irradiating the laser in the first direction.

In an embodiment, performing the second welding includes irradiating the laser in the second direction, and performing the third welding the third welding includes irradiating the laser in the first direction.

In an embodiment, at least one of the first heat input and the second heat input may be 40% or more and 60% or less of the third heat input.

In an embodiment, the main welding operation may be performed after the one-side sub-welding operation and the other-side sub-welding operation, and the one-side sub-welding operation may be performed before the other-side sub-welding operation.

In this way, the battery cell and the battery cell case implemented based on some embodiments can exhibit improved quality.

Additionally, the battery cell and the battery cell case implemented based on some embodiments can exhibit improved manufacturing efficiency and improved welding quality.

Additionally, the manufacturing method for the battery implemented based on some embodiments can exhibit improved welding efficiency.

### BRIEF DESCRIPTION OF DRAWINGS

Certain aspects, features, and advantages of the disclosed technology are illustrated by the following detailed description with reference to the accompanying drawings.
FIG. 1 is a partially exploded perspective view of a battery cell based on an embodiment of the disclosed technology.
FIG. 2 is a partially exploded perspective view of a case based on an embodiment of the disclosed technology.
FIG. 3 is a cross-sectional view taken along line I-I' of FIG. 1.
FIG. 4 is a schematic cross-sectional view taken along line II-II' of FIG. 1.
FIG. 5 schematically illustrates a cross-section of a first step welding region in a thickness direction of a case.
FIG. 6 is a view schematically illustrating a first back bead formed in the first step welding region, and illustrates an inner surface of the case.
FIG. 7 is a view schematically illustrating a second back bead formed in a second step welding region and illustrates an inner surface of the case.
Fig. 8 schematically illustrates a cross-section of the second step welding region in a thickness direction of the case.
FIG. 9 schematically illustrates a first step welding region, a second step welding region, and a main welding region based on another embodiment of the disclosed technology.
FIG. 10 schematically illustrates a manufacturing method for a case for a battery cell based on an embodiment of the disclosed technology.

### DETAILED DESCRIPTION

Various embodiments of the disclosed technology will now be described in detail with reference to the attached drawings. These descriptions are merely examples and the disclosed technology is not limited to the specific embodiments described in this patent document.

A battery may be manufactured as a battery cell by assembling an electrode assembly including a positive electrode plate, a negative electrode plate, and a separator into a case, injecting an electrolyte into the case, and then sealing the case.

The case may be square, pouch-shaped, cylindrical, or other forms. For square cases, a space for the electrode assembly may be created by bending a plate formed of a metal material. In this case, the case may be can-shaped, which is sealed by covering the can-shaped case with a cap plate.

When multiple plates are used or when plate joints need to be connected, welding may be performed. During the welding process, a back bead may be formed on the opposite side of the welding surface. This back bead may be considered as a critical factor in the quality control of a battery cell.

Hereinafter, an X-axis illustrated in the accompanying drawings indicates a thickness direction of a battery cell 100, a Y-axis indicates a length direction of the battery cell 100, and a Z-axis indicates a width direction of the battery cell 100. However, this is a direction arbitrarily set for convenience of description, and the above-described directions may be changed.

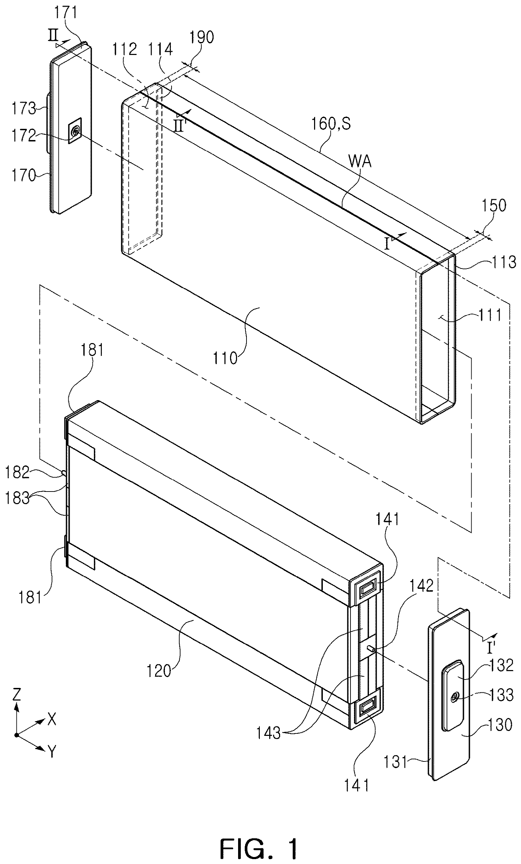

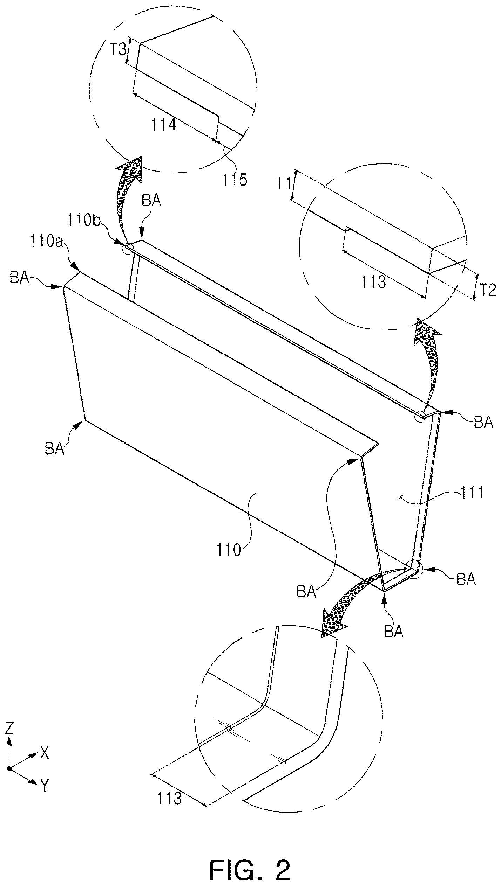

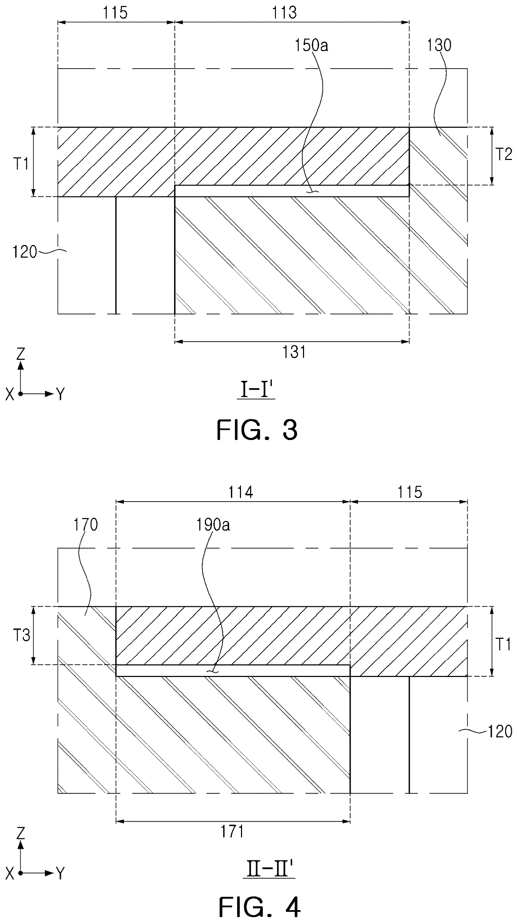

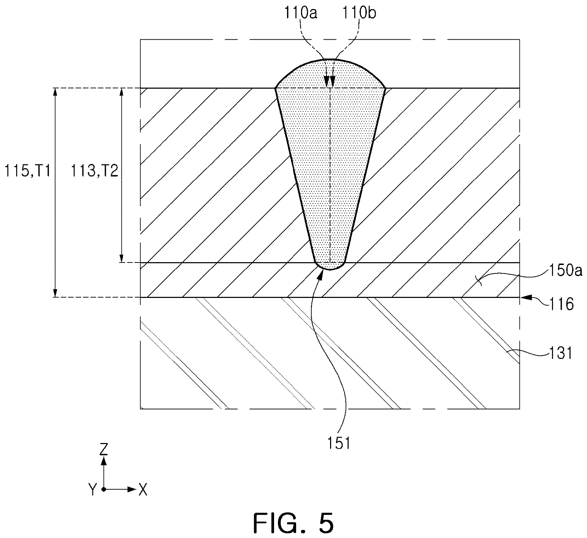

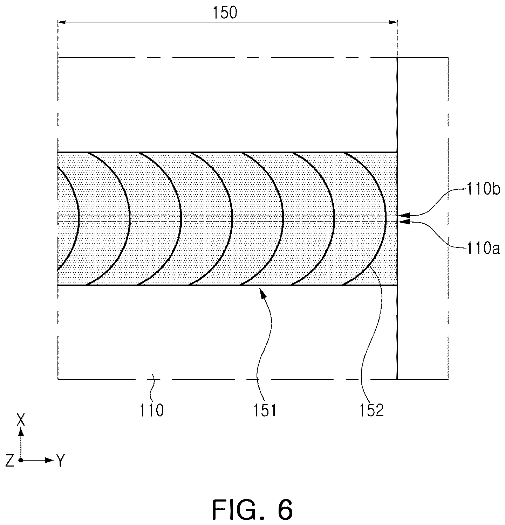

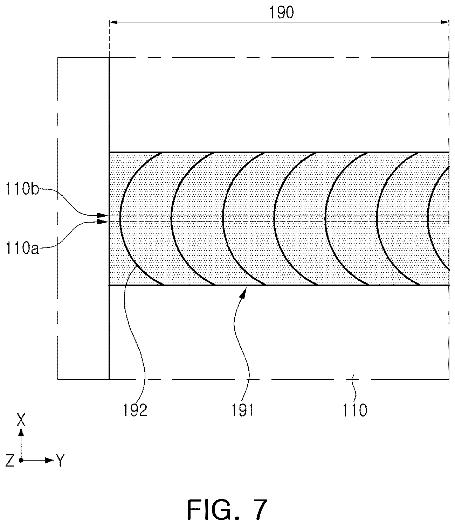

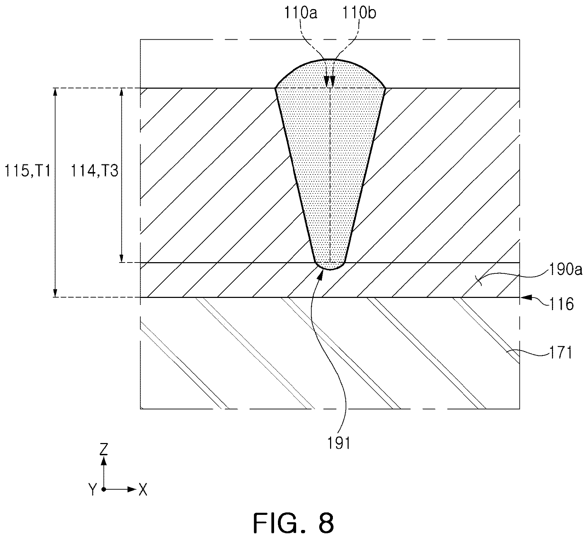

FIG. 1 is a partially exploded perspective view of a battery cell based on an embodiment of the disclosed technology, FIG. 2 is a partially exploded perspective view of a case 110 based on an embodiment of the disclosed technology, FIG. 3 is a cross-sectional view taken along line I-I' of FIG. 1, and FIG. 4 is a view schematically illustrating a cross-section taken along line II-II' of FIG. 1. FIG. 5 is a view schematically illustrating a cross-section of a first step welding region 150 in a thickness direction of the case 110, FIG. 6 schematically illustrates a back bead formed in the first step welding region 150, and illustrates an inner surface of the case 110, and FIG. 7 is a view schematically illustrating a back bead formed in a second step welding region 190, and illustrates an inner surface of the case 110. FIG. 8 schematically illustrates a cross-section of the second step welding region 190 in a thickness direction of the case 110.

First, as illustrated in FIG. 1, FIG. 5 and FIG. 8, a battery cell 100 based on an embodiment of the disclosed technology may include a case 110 including a first open region 111 and a second open region 112 facing each other and including at least one step region 113 or 114 connected to at least one of the first open region 111 or the second open region 112 and a receiving region S connected to the at least one step region 113 or 114, an electrode assembly 120 disposed in the receiving region S and including a positive electrode plate, a negative electrode plate and a separator, a plurality of cap plates 130 and 170 covering the first open region 111 and the second open region 112, at least one step welding region 150 or 190 formed in the at least one step region 113 or 114, and a main welding region 160 connected to the at least one step welding region 150 or 190 and formed in the receiving region S, and a first thickness T1, a thickness of the receiving region S, may be thicker than a second thickness T2, a thickness of at least one step region 113 or 114. In an implementation, the separator may be disposed between the positive electrode plate and the negative electrode plate.

In the case 110, the receiving region S may be connected to at least one step region 113 or 114. Additionally, in an embodiment, at least one step region 113 or 114 may include a plurality of step regions 113 and 114, and the receiving region S may be interposed between the plurality of step regions 113 and 114.

Since the case 110 has the first thickness T1 and the second thickness T2, the case 110 may have a shape having a step in a cross-section thereof in thickness direction. The first thickness T1 may be a thickness of the case 110 in a region facing or corresponding to the receiving region S in the case 110. The second thickness T2 may be a thickness of the case 110 in a region other than the receiving region S in the case 110, or may be a thickness of the case 110 in a region facing or corresponding to at least one step region 113 or 114 in the case 110.

In an embodiment, the at least one step region 113 or 114 may include a plurality of step regions 113 and 114. The thicknesses of the plurality of step regions 113 and 114 may be identical to each other. That is, the case 110 may have the same thickness in the plurality of step regions 113 and 114. The case 110 may have the second thickness in the plurality of step regions 113 and 114. Here, the first thickness may be thicker than the second thickness. For example, an absolute value of the first thickness may be greater than an absolute value of the second thickness.

Step welding regions 150 and 190 may be formed in each of the plurality of step welding regions 113 and 114. The main welding region 160 may be formed between the plurality of step welding regions 150 and 190, and the main welding region 160 may be connected to the plurality of step welding regions 150 and 190.

In an embodiment, at least one back bead (or back groove) 151 or 191 formed in at least one step welding region 150 or 190 may protrude in an extension line extending in which an inner surface of the case 110 in the receiving region S extends toward the at least one step region 113 or 114. Additionally, a protrusion height of at least one back bead 151 or 191 may be more than 0 µm and 90 µm or less. In this case, at least one step region 113 or 114 may include a plurality of step regions 113 and 114, and at least one step welding region 150 or 190 may include a plurality of step welding regions 150 and 190.

A plurality of back beads 151 and 191 formed in each of the plurality of step welding regions 150 and 190 may protrude in an extension line 116 in which the inner surface of the case 110 in the receiving region S extends toward the step regions 113 and 114.

The receiving region S may be a region facing the electrode assembly 120, and the main welding region 160 may be formed in the receiving region S. The extension line 116 may be a line extending in a straight line in a direction in which the inner surface of the case 110 in the receiving region S face at least one open region of the first open region 111 and the second open region 112.

The extension line 116 may be parallel to a line forming an edge of the case 110 in at least one direction in a cross-section of the case 110 in the thickness direction.

The case 110 may be open in both ends thereof to form the first open region 111 and the second open region 112. Additionally, the first open region 111 and the second open region 112 may be formed in an X-Z plane, and may be spaced apart from each other in a Y-axis direction. The first open region 111 may be covered with the first cap plate 130, and the second open region 112 may be covered with the second cap plate 170.

Additionally, in an embodiment, the first step welding region 150 (or the first step region 113) may be connected to the first cap plate 130, and the second step welding region 190 (or the second step region 114) may be connected to the second cap plate 170.

In an embodiment, at least one of the case 110, the first cap plate 130 and the second cap plate 170 may be provided with at least one venting hole (not illustrated). The venting hole may be a passage through which venting gas existing in the case 110 is discharged to the outside of the case 110. However, the position, shape, and number of venting holes are not necessarily limited by the disclosed technology, and may be appropriately selected and applied according to specifications required for the battery cell 100.

The case 110 may be a material including metal. In an embodiment, the case 110 may be a material including steel. Additionally, in an embodiment, the case 110 may be a material including aluminum.

In an embodiment, the case 110 may be formed by bending a single plate, and the at least one step welding region 150 or 190 and the main welding region 160 may be regions in which one end and the other end of the single plate are in contact with each other and welded together. Hereinafter, the plate may be the case 110. The plate may be a material including steel.

Additionally, in an embodiment, the plate may be a material including aluminum. Additionally, at least one step welding region 150 or 190 may include a plurality of step welding regions 150 and 190. In an embodiment, the plurality of step welding regions 150 and 190 may include a first step welding region 150 and a second step welding region 190. Additionally, the main welding region 160 may be connected to the first step welding region 150 and the second step welding region 190, and may be disposed between the first step welding region 150 and the second step welding region 190.

In an embodiment, the plate may be bent so that both ends 110a and 110b of the single plate face each other. The plate may include a plurality bending regions (BA). The plate may be bent or curved so that a cross-section thereof is rectangular in a thickness direction thereof.

The two opposite ends 110a and 110b of the plate may be bonded to each other by welding, and a welded region of the plate may be a welding region (WA). The welding region (WA) may be formed continuously from an end of the plate in a +Y-direction to an end thereof in a -Y-direction. The first step welding region 150, the main welding region 160 and the second step welding region 190 may be in a straight line, and widths of the first step welding region 150, the main welding region 160 and the second step welding region 190 in an X-axis direction may be identical to each other.

The two opposite ends 110a and 110b of the plate may be bonded to each other by welding, and the both ends 110a and 110b of the plate may be bonded to each other, so that a space in which the electrode assembly 120 is received may be formed.

In an embodiment, both ends 110a and 110b of the plate may be welded with a laser.

The welding region (WA) may be formed on any one of the plurality of surfaces forming the case 110. The welding region (WA) may be continuously present in the longitudinal direction (e.g., Y-axis direction) of the battery cell or electrode assembly 120, on any one surface of the case 110.

In an embodiment, the at least one step welding region 150 or 190 and the main welding region 160 may be formed on any one of the plurality of surfaces forming the case 110. For example, the plurality of step welding regions 150 and 190 and the main welding region 160 may be formed on any one of the plurality of surfaces forming the case 110.

Additionally, in an embodiment, the welding region (WA) may include a first step welding region 150, a main welding region 160 and a second step welding region 190.

In an embodiment, the main welding region 160 may be connected to the plurality of step welding regions 150 and 190.

In the plate, the first open region 111 may be open, and an opposite side opposite to the first open region 111, that is, a surface on which the first open region 111 is moved in parallel with a longitudinal direction (e.g., Y-axis direction) of the battery cell, may also be opened. A region in which the first open region 111 is moved by an opposite end of the plate in parallel in the -Y-direction may be a second open region 112. Hereinafter, the plate will be unified and referred to as a case 110.

An electrode assembly 120 may be received in the case 110. The electrode assembly 120 includes a positive electrode plate and a negative electrode plate, and a separator may be interposed between the positive electrode plate and the negative electrode plate. The positive electrode plate and the negative electrode plate may be provided in plural, and the separator may be provided in each space between the positive electrode plate and the negative electrode plate. An insulating member (not illustrated) formed of an electrically insulating material may be provided between the case 110 and the electrode assembly 120.

In an embodiment of the disclosed technology, a plurality of cap plates may include a first cap plate 130 covering the first open region 111 and a second cap plate 170 covering the second open region 112. Additionally, the step region may include a first step region 113 connected to the first open region 111 and formed from the first open region 111 to a predetermined section in a direction oriented toward the electrode assembly 120, and a second step region 114 connected to the second open region 112 and formed from the second open region 112 to the predetermined section in the direction oriented toward the electrode assembly 120.

Specifically, at least one step region may be a plurality of step regions. The plurality of step regions may include the first step region 113 and the second step region 114. The first step region 113 may be a region connected to the first open region 111, and formed from the first open region 111 to a predetermined section in the -Y-direction.

The second step region 114 may be a region connected to the second open region 112, and formed from the second open region 112 to a predetermined section in the +Y-direction. The electrode assembly 120 may be disposed between the first step region 113 and the second step region 114. The electrode assembly 120 does not exist in a region surrounded by an inner surface of the first step region 113 and a region surrounded by an inner surface of the second step region 114. A first insertion region 131 of the first cap plate 130 may be disposed in the region surrounded by the inner surface of the first step region 113, and a second insertion region 171 of the second cap plate 170 may be disposed in the region surrounded by the inner surface of the second step region 114.

A thickness of the first step region 113 may be thinner than a thickness of the case 110 in a region in which the case 110 faces the electrode assembly 120. Furthermore, a thickness of the second step region 114 may be thinner than a thickness of the case 110 in the region in which the case 110 faces the electrode assembly 120.

In an embodiment, the thickness of the first step region 113 and the thickness of the second step region 114 may be identical to each other. The first step region 113 and the second step region 114 may be continuously present in a circumferential direction of the case 110.

As described above, the first insertion region 131 formed on the first cap plate 130 may be inserted into the first step region 113 of the case 110, and the second insertion region 171 formed in the second cap plate 170 may be inserted into the second step region 114. The first insertion region 131 and the second insertion region 171 may not come into contact with the inner surface of the case 110 when inserted into the case 110.

In an embodiment of the disclosed technology, a plurality of terminal portions may include a first terminal portion 132 disposed on the first cap plate 130 and electrically connected to the electrode assembly 120, and a second terminal portion 173 disposed on the second cap plate 170 and electrically connected to the electrode assembly 120.

In an embodiment of the disclosed technology, the battery cell may have a plurality of terminal portions, and may be a bidirectional battery cell in which the plurality of terminal portions are drawn out in different directions. Hereinafter, a bidirectional battery cell will be described as an example.

In the disclosed technology, the plurality of positive electrode plates may be electrically connected to a positive electrode current collector 141. In an embodiment, the positive electrode current collector 141 may be provided in plural, and among the plurality of positive electrode plates, some of the positive electrode plates may be electrically connected to one positive electrode current collector 141. Additionally, the remaining positive electrode plates may be electrically connected to another positive electrode current collector 141. The plurality of positive electrode collectors 141 may be electrically connected by a positive electrode connector 143.

In an embodiment, the positive electrode connector 143 may be electrically connected to a positive electrode pin 142. The positive electrode pin 142 may be formed of an electrically conductive material and may protrude in a direction oriented toward the first cap plate 130.

The first cap plate 130 may include a positive electrode pin hole 133 on an inner surface thereof, and the first terminal portion 132 may be exposed to an outer surface of the first cap plate 130. The first terminal portion 132 of the first cap plate 130 may be formed of an electrically conductive material, and the positive electrode pin hole 133 may be provided on an inner surface of the first terminal portion 132. Accordingly, the positive electrode pin 142 may be inserted into the positive electrode pin hole 133, so that the first terminal portion 132 may be electrically connected to the plurality of positive electrode plates. In an embodiment, the positive electrode pin 142 may be welded to the first terminal portion 132.

Additionally, in an embodiment, the plurality of negative electrode plates may be electrically connected to a negative electrode current collector 181. In an embodiment, the negative electrode current collector 181 may be provided in plural, and among the plurality of positive and negative electrode plates, some of the negative electrode plates may be electrically connected to one negative electrode current collector 181. Additionally, the remaining negative electrode plates may be electrically connected to another negative electrode current collector 181. The plurality of negative electrode current collectors 181 may be electrically connected by the negative electrode connector 183.

In an embodiment, the negative electrode connector 183 may be electrically connected to a negative electrode pin 182. The negative electrode pin 182 may be formed of an electrically conductive material and may protrude in a direction oriented toward the second cap plate 170.

The second cap plate 170 may include a negative electrode pin hole 172 on an inner surface thereof, and the second terminal portion 173 may be exposed on an outer surface of the second cap plate 170. The second terminal portion 173 of the second cap plate 170 may be formed of an electrically conductive material, and the negative electrode pin hole 172 may be provided on the inner surface of the second terminal portion 173. Accordingly, the negative electrode pin 182 may be inserted into the negative electrode pin hole 172 so that the second terminal portion 173 may be electrically connected to a plurality of negative electrode plates. The negative electrode pin 182 may be welded to the second terminal portion 173.

The positive electrode plate may include a positive electrode plate uncoated region, a region on which a positive active material is not coated, and the negative electrode plate may include a negative electrode plate uncoated region, a region on which a negative active material is not coated. In the case in which the positive and negative electrode plates are provided in plural, the positive electrode plate uncoated regions may be welded together so that the positive current collector 141 may be electrically connected to the positive electrode plate uncoated region. Additionally, the negative electrode plate uncoated regions may be welded together so that the negative current collector 181 may be electrically connected to the negative electrode plate uncoated region.

In an embodiment, an insulating member having electrical insulation may be further provided on a partial region of an inner surface of the first cap plate 130 and a partial region of an inner surface of the second cap plate 170.

However, this is made based on an embodiment of the disclosed technology, and a method of connecting the positive electrode plate and the positive electrode collector 141, a method of connecting the negative electrode plate and the negative electrode collector 181, positions of the first terminal portion 132 and the second terminal portion 173, and a method of electrically connecting the electrode assembly 120 and the first terminal portion 132 and the second terminal portion 173, are not necessarily limited by the disclosed technology.

As illustrated in FIGS. 2 and 3, a first back bead forming space 150a may be provided between the inner surface of the case 110 and the first insertion region 131 in the first step region 113. Additionally, as illustrated in FIG. 4, a second back bead forming space 190a may be provided between the inner surface of the case 110 and the second insertion region 171 in the second step region 114.

The first back bead forming space 150a and the second back bead forming space 190a may be empty spaces. The empty space described above does not refer to a vacuum state, which may denote that no components related to the first cap plate 130, the second cap plate 170 and the electrode assembly 120 exist in the empty space.

As illustrated in FIG. 3 and FIG. 4, in the case 110, a thickness of the first step region 113 in the Z-axis direction and a thickness of the second step region 114 in the Z-axis direction may be thinner than a thickness of an electrode assembly receiving region 115 in the Z-axis direction.

The electrode assembly 120 may be received in the electrode assembly receiving region 115 of the case 110. The electrode assembly receiving region 115 may be a hollow portion connected to the first open region 111 and the second open region 112.

In a cross-section of the case 110 in a thickness direction, the thickness of the electrode assembly receiving region 115 in the Z-axis direction may be thicker than the thickness of the first step region 113 in the Z-axis direction. Due to the thickness difference, the first insertion region 131 of the first cap plate 130 may be pushed to a portion in which the case 110 protrudes in the thickness direction, that is, to a boundary between the first step region 113 and the electrode assembly receiving region 115, thereby completing an insertion operation of the first cap plate 130.

Additionally, due to the thickness difference, the first step region 113 and the second step region 114, which are relatively thin region of the case 110, may be welded with lower energy than a region in which the case 110 faces the electrode assembly 120 in the Z-axis direction.

At least a portion region of the first cap plate 130 may protrude in the direction oriented toward the electrode assembly 120, thus forming the first insertion region 131. An end of the first insertion region 131 in the -Y-direction may face the electrode assembly 120 and may be inserted into the first open region 111 of the case 110.

In the first cap plate 130, the first insertion region 131 may be a region protruding from a surface on which the first cap plate 130 faces the positive electrode pin, and the first insertion region 131 may be a region in which widths of the first cap plate 130 in the X-axis direction and the Z-axis direction are reduced.

Accordingly, a first insertion operation of the first cap plate 130 may be completed by simply pushing the first insertion region 131 into the case 110 until a movement of the first cap plate 130 is restricted. This may contribute to improving the efficiency of an assembly operation and improving the manufacturing efficiency of the battery cell 100.

In an embodiment, the positive electrode pin hole 133 may be a hole penetrating through the first insertion region 131. Accordingly, the positive electrode pin may be inserted into the positive electrode pin hole 133 and may come into contact with the first terminal portion 132. The first terminal portion 132 may be provided on an outer surface of the first cap plate 130, or may be in a form in which at least a partial region of the first terminal portion 132 penetrates into the interior of the first cap plate 130. However, this is not necessarily limited by the disclosed technology. The negative electrode pin, the negative electrode pin hole 172 and the second terminal portion 173 may also be implemented in the second cap plate 170 according to the same principle as the positive electrode pin, the positive electrode pin hole 133 and the first terminal portion 132.

In an embodiment, a length of the first insertion region 131 in the Y-axis direction and a length of the first step region 113 in the Y-axis direction may be at least the same.

Side surfaces of the first insertion region 131 may not be in contact with the inner surface of the case 110 in a state in which the first insertion region 131 is inserted into the first open region 111. The first open region 111 may be a region surrounded by the first step region 113 in the open region of the case 110. Among the plurality of surfaces forming the first insertion region 131, the surfaces facing the first step region 113 of the case 110 may not be in contact with the inner surface of the case 110.

The first cap plate 130 and the case 110 may be welded in an end of the case 110 in a +Y-direction, and the first cap plate 130 may be bonded to the case 110.

The case 110 may include the first step region 113 formed from the end thereof in the +Y-direction to a predetermined section in a -Y-direction. The first step region 113 may be a region formed by sinking a portion of the case 110 in a thickness direction of the case 110. The first step region 113 may be continuously present in the circumferential direction of the case 110 (or the direction along the perimeter of the case 110).

The first step region 113 may be formed on the inner surface of the case 110, and the electrode assembly 120 may not be disposed in a cross-section of the case 100 in the thickness direction, that is, directly below the first step region 113 in a -Z-direction in a Y-Z plane. In the Y-Z plane, the first insertion region 131 of the case 110 may be disposed directly below the first step region 113 in the - Z-direction. Accordingly, the first step region 113 may not face(or oppose) the electrode assembly 120.

The case 110 may include the electrode assembly receiving region 115, a region facing the electrode assembly 120 in the cross-section of the case 110 in the thickness direction. In the case 110, the first step region 113 may be connected to the electrode assembly receiving region 115 in the +Y-direction.

The end of the first insertion region 131 in the - Y-direction may not be in contact with the electrode assembly 120. The first insertion region 131 may be spaced apart from the electrode assembly 120 by an insulating member (not illustrated).

The electrode assembly 120 and an electrolyte may be accommodated in the case 110, and the first open region 111 may be covered with the first cap plate 130 to seal the case 110. In an embodiment, the first cap plate 130 may be formed of the same material as the case 110 and may be welded to the case 110. The second cap plate 170 may also cover the second open region 112 to seal the case using the same principle. An operation of covering the case 110 with the second cap plate 170 may be performed after an operation of covering the case 110 with the first cap plate 130. However, the order is not necessarily limited by the disclosed technology.

In some implementations, the first step welding region 150 may be a region formed from the end of the case 110 in the +Y-direction to a predetermined section in the - Y-direction. The first step welding region 150 may be a region formed from the end of the case 110 in the +Y-direction to a point at which a +Z-directional extension line of the end of the first insertion region 131 in the - Y-direction intersects the case 110.

The main welding region 160 may be a region formed from the first step welding region 150 to a predetermined section of the case 110in the -Y-direction.

The second step welding region 190 may be a region formed from the main welding region 160 to an end of the case 110 in the -Y-direction.

In an embodiment, the welding region (WA) may be formed by irradiating a laser on an outer surface of the case 110. Accordingly, in the welding region (WA), at least one back bead formed by welding may be present on the inner surface of the case 110. The back bead may protrude by a certain height in the -Z-direction from the inner surface of the case 110 and may include a bead pattern formed by melting the case 110.

In an embodiment, at least one of the at least one step welding region 150 and the main welding region 190 may be welded with the laser.

The bead pattern may be formed by melting and solidifying the case 110, and may be formed as a concave region and a convex region in the case 110. In an embodiment, the bead pattern may be visually displayed on a video processing device or an image processing device by detecting the amount of light reflected by irradiating a certain amount of light on the back bead of the welding region (WA), and may also be detected with the naked eye of a worker.

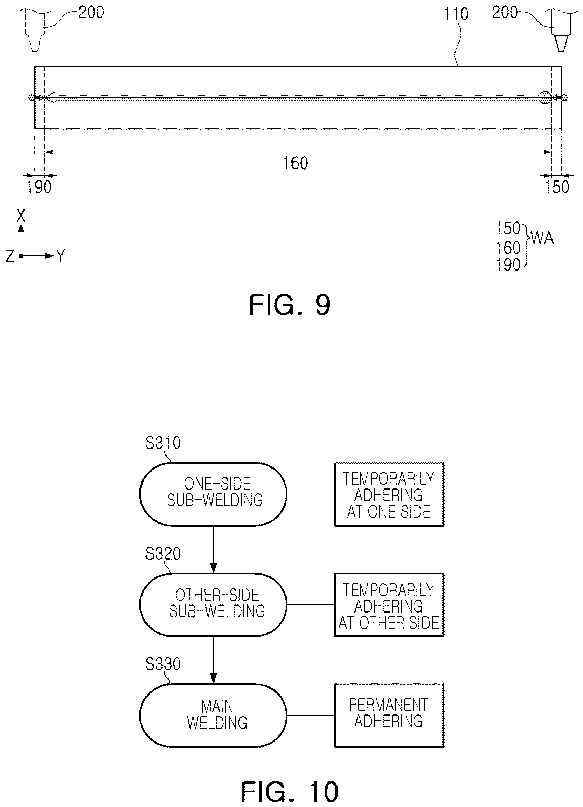

FIG. 5 schematically illustrates a cross-section of a case 110 of a first step welding region 150 in a thickness direction, FIG. 6 schematically illustrates a first back bead 151 formed in the first step welding region 150, which illustrates an inner surface of the case 110, FIG. 7 schematically illustrates a second back bead 191 formed in a second step welding region 190, which illustrates an inner surface of the case 110, FIG. 8 schematically illustrates a cross-section of a case 110 of a second step welding region 190 in the thickness direction, and FIG. 9 schematically illustrates a first step welding region 150, a second step welding region 190 and a main welding region 160 based on another embodiment of the disclosed technology.

As illustrated in FIGS. 5 to 9, in an embodiment of the disclosed technology, a heat input (J/mm) of the first step welding region 150 and a heat input of the second step welding region 190 may be less than a heat input of the main welding region 160.

In an embodiment, the first back bead 151 of the first step welding region 150 and the second back bead 191 of the second step welding region 190 may differ from a back bead of the main welding region 160 in at least one condition among conditions such as a shape, a bead pattern and a size.

The first insertion region 131 and the inner surface of the case 110 may be spaced apart from each other, thus forming a first back bead forming space 150a. In the cross-section of the case 110 in the thickness direction, the first back bead forming space 150a may be formed directly below the first step region 113 in the -Z-direction.

In the cross-section of the case 110 in the thickness direction, the first back bead forming space 150a may be a space extending from the inner surface of the case 110 to a +Y-directional extension line 116 of the electrode assembly receiving region 115 in the -Z-direction.

In the first back bead forming space 150a, the first back bead 151 formed by the laser irradiated to the outer surface of the case 110 in the first step region 113 may be present. The first back bead 151 may be formed while welding the first step welding region 150, and may protrude from the inner surface of the first step region 113 in the -Z-direction.

In an embodiment, the first back bead 151 is present only in the first back bead forming space 150a, and the first back bead 151 does not exceed the back bead forming space 150a in the -Z-direction. Accordingly, interference between the first cap plate 130 and the first back bead 151 may be prevented.

In this way, the interference between the first insertion region 131 of the first cap plate 130 and the first back bead 151 may be prevented. Accordingly, the dimensional precision of the battery cell 100 may be improved, and the quality and assembly efficiency of the battery cell 100 may be improved. Additionally, damage, deformation, scratches, and others, of the first cap plate 130 caused by the first back bead 151 may be prevented.

In some implementations, as illustrated in FIG. 9, the welding region (WA) may be formed by irradiating the laser on the outer surface of the case 110 with a laser head 200. The laser head 200 may be moved automatically or manually. The laser head 200 may be automatically moved by a robot arm, etc., but this is not necessarily limited by the disclosed technology, and a method of moving the laser head 200 may be appropriately selected and applied according to a manufacturing environment of the battery cell 100.

When welding the first step welding region 150, the laser head 200 may be moved from a +Y-directional end of the case 110 in the -Y-direction and may irradiate the laser to the case 110. In this case, the case 110 may be welded so that the heat input to the first step welding region 150 is less than the heat input to the main welding region 160.

Additionally, the laser head 200 may complete the welding of the first step welding region 150 and may weld the second step welding region 190. When welding the second step welding region 190, the laser head 200 may be moved from a -Y-directional end of the case 110 in the +Y-direction and may irradiate the laser to the case 110. In this case, the heat input to the second step welding region 190 may be made identical to the heat input to the first step welding region 150.

The laser head 200 may complete the welding of the second step welding region 190 and may weld the main welding region 160. In this case, when welding the main welding region 160, the laser head 200 may start the welding from a -Y-directional end of the first step region 113 and may move in the -Y-direction and simultaneously perform the welding up to a point immediately before the second step region 114. In this case, the heat input to the main welding region 160 may be made greater than the heat input to the first step welding region 150 and the heat input to the second step welding region 190.

In an embodiment, the laser head 200 may set a heat input of the first step welding region 150 to a value that is 40% or more and 60% or less than the heat input of the main welding region 160. Additionally, in an example embodiment, the laser head 200 may set the heat input of the second step welding region 190 to a value that is 40% or more and 60% or less than the heat input of the main welding region 160. The laser head 200 may weld the first step welding region 150 and the second step welding region 190 with the same heat input.

Accordingly, the welding quality may be improved in the first step welding region 150 and the second step welding region 190 in which a thickness of the case 110 is thinner than that of the main welding region 160, and the first back bead 151 formed in the first step welding region 150 and the second back bead 191 formed in the second step welding region 190 may be prevented from protruding beyond a thickness of the electrode assembly receiving region 115.

Additionally, in an embodiment, after the laser head 200 completes the welding of the first step welding region 150, the laser head 200 may weld the second step welding region 190 after a certain rest period and may weld the main welding region 160 after a certain rest period.

In an embodiment, the laser head 200 may enter the case 110 while irradiating the laser energy from the outside of the case 110. That is, the laser head 200 may irradiate the laser energy from the outside of the case 110, and the laser head 200 may enter the case 110 while maintaining a state of irradiating the laser energy.

When forming the first step welding region 150, the laser head 200 may enter the case 110 through the end of the case 110 in the +Y-direction.

Accordingly, as illustrated in FIG. 6, a first bead pattern 152 of the first back bead 151 formed in the first step welding region 150 may have an arc shape in which a center thereof is present in a center direction of the case 110 in a Y-axis.

The first bead pattern 152 may be provided in plural in the first step welding region 150, and may protrude convexly in an end direction of the case 110 in the +Y-direction. The first bead pattern 152 is not present in the end of the case 110 in the +Y-direction.

Accordingly, it may be possible to prevent a phenomenon in which the end of the case 110 is sunken or crushed by the first back bead 151 or the first bead pattern 152 in an end of the battery cell of the case 110 in the longitudinal direction (e.g., Y-axis direction), i.e., an end of a side surface thereof.

Additionally, it may be possible to prevent the case 110 from being bent or prevent a shape of the case 110 from being crushed in the end of the case 110. Accordingly, a process of cutting a portion of the end of the case 110 may be excluded, and a post-processing of smoothing the end of the case 110 may be excluded. This may contribute to improving the assembly efficiency and manufacturing efficiency of the battery cell 100.

Additionally, as illustrated in FIG. 7, in an embodiment, a second bead pattern 192 of the second back bead 191 formed in the second step welding region 190 may have an arc shape in which a center thereof is present in the center direction of the case 110 in the Y-axis.

The second bead pattern 192 may be provided in plural in the second step welding region 190, and at least a portion of the second bead pattern 192 may protrude convexly in an end direction of the case 110 in the -Y-direction. The second bead pattern 192 may be not present in the end of the case 110 in the -Y-direction.

Accordingly, it may be possible to prevent a phenomenon in which the end of the case 110 is sunken or crushed by the second back bead 191 or the second bead pattern 192 in an end of the battery cell of the case 110 in the longitudinal direction (e.g., Y-axis direction), i.e., an end of a side surface thereof.

A battery cell 100 based on another embodiment of the disclosed technology may include a case 110 including a first open region 111 and a second open region 112 facing each other, and including a plurality of step regions 113 and 114 connected to the first open region 111 and the second open region 112 and a receiving region S connected to the plurality of step regions 113 and 114, an electrode assembly 120 disposed in the receiving region S and including a positive electrode plate, a negative electrode plate and a separator, a plurality of cap plates 130 and 170 covering the first open region 111 and the second open region 112, a plurality of step welding regions 150 and 190 formed in the plurality of step regions 113 and 114, and a main welding region 160 formed in the receiving region S and disposed between the plurality of step welding regions 150 and 190. In this case, a plurality of back beads 151 and 191 formed in the plurality of step welding regions 150 and 190 may have shapes inverted with respect to the main welding region 160. An electrode assembly may be received in the receiving region S of the case 110, and the receiving region S may face the electrode assembly 120.

A separator may be interposed between the positive electrode plate and the negative electrode plate and may insulate the positive electrode plate and the negative electrode plate from each other. Additionally, the plurality of cap plates 130 and 170 may include a first cap plate 130 and a second cap plate 170.

In an embodiment, the plurality of back beads 151 and 191 may include bead patterns 152 and 192 formed by melting the case 11 by heat, and the bead patterns 152 and 192 may be formed in a region excluding the end of the case 110, in the plurality of step welding regions 150 and 190. For example, the bead patterns may be provided in plural, and the plurality of bead patterns 152 and 192 may be formed in a region excluding one end and the other end of the case 110, in the plurality of step welding regions 150 and 190. In this case, the one end and the other end of the case 110 may be ends of the case 110 in the longitudinal direction.

In an embodiment, the first bead pattern 152 and the second bead pattern 192 may be shapes inverted with respect to the main welding region 160 or an X-axis.

For example, when the first bead pattern 152 is inverted to the left with respect to the main welding region 160, a shape thereof may become the second bead pattern 192. Conversely, when the second bead pattern 192 is inverted to the right with respect to the main welding region 160, a shape thereof may become the first bead pattern 152. As described above, the first bead pattern 152 and the second bead pattern 192 may be shapes inverted left and right with respect to the X-axis.

Additionally, the first back bead 151, the second back bead 191, and the back bead of the main welding region 160 on the inner surface of the case 110 may be present on the same line in at least some regions. Additionally, widths of the back beads of the first back bead 151, the second back bead 191 and the main welding region 160 in the X-axis direction on the inner surface of the case 110 may be the same.

In an embodiment, lengths of the first bead pattern 152 and the second bead pattern 192 in the X-axis direction and lengths thereof the Y-axis direction may be the same. Additionally, absolute values of a radius of curvature of the first bead pattern 152 and a radius of curvature of the second bead pattern 192 may be the same. The first bead pattern 152 and the second bead pattern 192 may include curves protruding in opposite directions.

For example, the first bead pattern 152 and the second bead pattern 192 may be formed on the first back bead 151 and the second back bead 191, respectively.

Additionally, in an embodiment, a plurality of back beads 151 and 191 may protrude in an extension line 116 in which the inner surface of the case 110 extends in a direction oriented toward the step regions 113 and 114 in the receiving region S of the case 100.

Furthermore, as illustrated in FIG. 9, a welding direction of the first step welding region 150 may be a direction oriented from the +Y-directional end of the case 110 in the -Y-direction, and a welding direction of the second step welding region 190 may be a direction oriented from the -Y-directional end of the case 110 in the +Y-direction. Then, a welding direction of the main welding region 160 may be a direction oriented from a +Y-directional end of the first step welding region 150 in the -Y-direction.

That is, the welding direction of the main welding region 160 may be the same as the welding direction of the first step welding region 150, and the welding direction of the main welding region 160 may be different from the welding direction of the second step welding region 190. Accordingly, the first step welding region 150 may be welded first, and then the second step welding region 190 may be welded, but the first step welding region 150 may be cooled while welding the second step welding region 190.

Additionally, after welding the second step welding region 190 is completed, since welding of the main welding region 160 is started from the first step welding region 150 in which the cooling is completed first, the welding may be performed from a region as far away as possible from the second step welding region 190. Accordingly, the deformation of the second step welding region 190 may be minimized. Accordingly, a process waiting time may be shortened, and the welding quality may be improved. This may contribute to the improvement of the productivity of the battery cell.

Additionally, in an embodiment, the plurality of cap plates 130 and 170 may include a first cap plate 130 covering the first open region 111 and a second cap plate 170 covering the second open region 112. In this case, the plurality of step welding regions 150 and 190 may include a first step welding region 150 connected to the first cap plate 130 and a second step welding region 190 connected to the second cap plate 170.

For example, the first cap plate 130 may be in contact with or may be adjacent to the first step welding region 150, and the second cap plate 170 may be in contact with or may be adjacent to the second step welding region 190.

Hereinafter, with reference to FIGS. 5 to 9, protrusion heights of the first back bead 151 and the second back bead 191 welded with laser as described above will be described in more detail.

First, as illustrated in FIG. 5, the first back bead 151 formed in the first step welding region 150 may be formed in a region in which a first end 110a and a second end 110b of the case 110 are in contact with each other. The first back bead 151 may protrude by a certain height in the -Z-direction from the inner surface of the case 110.

The first back bead 151 may be disposed above the Y-directional extension line 116 of the electrode assembly receiving region 115 of the case 110 in the +Z-direction. Accordingly, the first insertion region 131 of the first cap plate 130 may not contact the first back bead 151. Accordingly, interference between the first back bead 151 and the first cap plate 130 may be prevented.

A first thickness T1, which is a thickness of the electrode assembly receiving region 115 in the Z-axis direction, may be thicker than a second thickness T2, which is a thickness of the first step region 113 in the Z-axis direction. In an embodiment, the second thickness T2 may be 800 or more and 100% or less of the first thickness T1.

Furthermore, in an embodiment, the first thickness T1 may be 0.6 mm and the second thickness T2 may be 0.5 mm.

Additionally, in an embodiment, a length of the first step region 113 having the second thickness T2 in the Y-axis direction may be a value that is 200% or more and 400% or less of the first thickness T1. Alternatively, a length from the end of the case 110 of at least one step region 113 or 114 toward the electrode assembly 120 may be a value that is 200% or more and 400% or less of the first thickness T1.

In an embodiment, the length of the first step region 113 in the longitudinal direction (e.g., Y-axis direction) of the battery cell may be 1.9 mm from a +Y-directional end of the case 110 to a longitudinal center direction of the case 110 in the Y-axis.

Accordingly, the case 110 may be welded while preventing deformation of the case 110 as compared to the heat input of the case 110. Additionally, the deformation of the case 110 may be minimized after welding, and the rigidity of the case 110 may be sufficiently secured even after welding.

In order to adjust a protrusion height of the first back bead 151 in the -Z-direction, the heat input of the first step welding region 150 may be made smaller than the heat input of the main welding region 160.

Additionally, welding speed may be adjusted to adjust the protrusion height of the first back bead 151 in the -Z-direction.

In an embodiment, the welding speed of the first step welding region 150 may be 200 mm/s, and the welding speed of the main welding region 160 may be 100 mm/s. In this case, the protrusion height of the first back bead 151 in the first step region 113 may be more than 0 um (micrometer) but less than or equal to 90 um. The first back bead 151 may protrude from the inner surface of the case 110 by a value more than 0 um (micrometer) but less than or equal to 90 um. Accordingly, the first back bead 151 may be prevented from coming into contact with the first insertion region 131 of the first cap plate 130.

In an embodiment, the welding speed may be moving speed of the laser head irradiating the laser.

Additionally, as illustrated in FIG. 8, the second back bead 191 formed in the second step welding region 190 may be formed in a region in which the first end 110a and the second end 110b of the case 110 are in contact with each other. The second back bead 191 may protrude by a certain height in the -Z-direction from the inner surface of the case 110.

In an embodiment, welding speed of the second step welding region 190 may be 200 mm/s.

Additionally, the second back bead 191 may be present in the +Z-direction above the Y-directional extension line 116 of the electrode assembly receiving region 115 of the case 110. According thereto, the second insertion region 171 of the second cap plate 170 may not be in contact with the second back bead 191. Accordingly, interference between the second back bead 191 and the second cap plate 170 may be prevented.

The first thickness T1, which is a thickness of the electrode assembly receiving region 115 in the Z-axis direction, may be thicker than a third thickness T3, which is a thickness of the second step region 114 in the Z-axis direction. In an embodiment, the third thickness T3 may be 800 or more and 100% or less of the first thickness T1. Additionally, the third thickness T3 may be the same as the second thickness T2.

Additionally, in an embodiment, the first thickness T1 may be 0.6 mm, and the third thickness T3 may be 0.5 mm.

Additionally, in an embodiment, a length of the second step region 114 having the third thickness T3 in the Y-axis direction may be a value that is 200% or more and 400% or less of the first thickness T1. In an embodiment, a length of the second step region 114 in the longitudinal direction (e.g., Y-axis direction) of the battery cell may be 1.9 mm from the end of the case 110 in the -Y-direction to the longitudinal center direction of the case 110 in the Y-axis. For example, the length of the second step region 114 of the case 110 may be identical to the length of the first step region 113.

Accordingly, the case 110 may be welded while preventing deformation of the case 110 as compared to the heat input of the case 110. Additionally, after welding, the deformation of the case 110 may be minimized, and the rigidity of the case 110 may be sufficiently secured even after welding.

Additionally, in order to adjust the protrusion height of the second back bead 191 in the -Z-direction, the heat input of the second step welding region 190 may be made smaller than the heat input of the main welding region 160.

In an embodiment, in the second step region 114, the second back bead 191 may protrude from the inner surface of the case 110 by a value exceeding 0 µm (micrometer) and 90 µm or less. Accordingly, the second back bead 191 may be prevented from coming into contact with the second insertion region 171 of the second cap plate 170.

In some implementations, the disclosed technology provides a manufacturing method for a case 110 of a battery cell. FIG. 10 schematically illustrates a manufacturing method for a case 110 of a battery cell 100 based on an embodiment of the disclosed technology.

As illustrated in FIGS. 1 to 10, the disclosed technology can be implemented in some embodiments to provide a manufacturing method for a case 110 of a battery cell 100 by welding connection regions of ends of plates formed of a metal material, which may include a one-side sub-welding operation (S310) (e.g., a first welding) of irradiating a laser with a first heat input to a region having a predetermined length in a direction oriented from one end of the plate toward the other end of the plate, an other-side sub-welding operation (S320) (e.g., a second welding) of irradiating the laser with a second heat input to a region having a predetermined length in a direction oriented from the other end of the plate to the one end of the plate, and a main welding operation (S330) (e.g., a third welding) of irradiating the laser with a third heat input to a connection region in which a thickness thereof is thicker than a thickness of the one end and a thickness of the other end, and in the one-side sub-welding operation (S310), the laser may be irradiated in a direction oriented from the one end toward the other end(e.g., a first direction).

In the one-side sub-welding operation (S310), the first step welding region 150 described above may be formed. Additionally, in the other-side sub-welding operation (S320), the second step welding region 190 described above may be formed, and in the main welding operation (S330), the main welding region 160 may be formed.

In the one-side sub-welding operation (S310), the laser may be irradiated in a direction oriented from one-side end of the case 110, that is, one-side end of the case 110 in the +Y-direction or one-side end of the case 110 in the longitudinal direction to a center of the case 110, and in this case, the laser head 200 may be moved in the -Y-direction. In this case, the center of the case 110 may be a centroid of the case 110 in a thickness directional cross-section (e.g., X-Y plane) of the case 110 or a center of the case 110 in the longitudinal direction (e.g., Y-direction).

In the one-side sub-welding operation (S310), a region including one-side end of the case 110 may be temporarily adhered or temporarily bonded.

In an embodiment, in the other-side sub-welding operation (S320), the laser may be irradiated in a direction oriented from the other-side end of the case 110 (e.g., a second direction), that is, the other-side end of the case 110 in the -Y-direction or the other-side end of the case 110 in the longitudinal direction of the case 110 to the center of the case 110 or the one-side end of the case 110.

In this case, the laser head 200 may be moved in the +Y-direction. In the other-side sub-welding operation (S320), a region including the other-side end of the case 110 may be temporarily weld or temporarily bonded. In the other-side sub-welding operation (S320), a region not temporarily bonded or welded in the one-side sub-welding operation (S310) may be temporarily bonded or temporarily adhered.

In the other-side sub-welding operation (S320), the laser head 200 may perform the welding in a direction facing the welding direction in the one-side sub-welding operation (S310). In this manner, the one-side sub-welding operation (S310) and the other-side sub-welding operation (S320) may move the laser head (200) in a direction facing each other or in the opposite direction.

In the one-side sub-welding operation (S310), the welding may be performed with the first heat input, and in the other-side sub-welding operation (S320), the welding may be performed with the second heat input. In an embodiment, the first heat input and the second heat input may be less than the third heat input, and in an embodiment, the first heat input and the second heat input may be identical to each other.

Additionally, the one-side sub-welding operation (S310) may be performed first, the other-side sub-welding operation (S320) may be performed next, and the main welding operation (S330) may be performed last. For example, the main welding operation (S330) may be performed after the one-side sub-welding operation (S310) and the other-side sub-welding operation (S320). Additionally, for example, the one-side sub-welding operation (S310) may be performed before the other-side sub-welding operation (S320).

In the main welding operation (S330), the welding may begin from an adjacent region in a region welded in the one-side sub-welding operation (S310) or a region neighboring the region welded in the one-side sub-welding operation (S310).

Accordingly, since the welding of the case 110 begins from a portion of the case 110 relatively welded first and cooled first, the welding quality of the case 110 may be improved. In the main welding operation (S330), main bonding or permanent bonding of the case 110 may be performed. After completion of the one-side sub-welding operation (S310), the other-side sub-welding operation (S320) and the main welding operation (S330), the welding region (WA) of the case 110 may be formed. Additionally, after the completion of the one-side sub-welding operation (S310), the other-side sub-welding operation (S320) and the main welding operation (S330), bonding of both ends 110a and 110b of the case 110 or both ends 110a and 110b of a plate forming the case 110 may be completed.

In an embodiment, the first step welding region 150 may be welded in the one-side sub-welding operation (S310), the second step welding region 190 may be welded in the other-side sub-welding operation (S320), and the main welding region 160 may be welded in the main welding operation (S330).

In an embodiment, in the main welding operation (S330), the welding may be performed with the third heat input. In an embodiment, at least one of the first heat input and the second heat input may be 40% or more and 60% or less of the third heat input. For example, the first heat input and the second heat input may be 40% or more and 60% or less of the third heat input.

Accordingly, in the one-side sub-welding operation (S310) and the other-side sub-welding operation (S320) of welding a relatively thin region in the case 110, it may be possible to prevent the first back bead 151 and the second back bead 191 from excessively protruding toward the electrode assembly 120.

Additionally, in an embodiment, in the main welding operation (S330), the laser may be irradiated in the same direction as an irradiating direction in the one-side sub-welding operation (S310) . That is, in the one-side sub-welding operation (S310), the laser may be irradiated in a direction from one-side end of the case 110 to the center of the case 110 or the receiving space S, and in the other-side sub-welding operation (S320), the laser may be irradiated in a direction from the other-side end of the case 110 to at least one of the center of the case 110, the receiving space S, and the one-side end of the case 110. Additionally, in the main welding operation (S330), the laser may be irradiated to the case 110 in the same direction as an irradiating direction of the one-side sub-welding operation (S310).

Accordingly, it may be possible to prevent the end of the case 110 or a longitudinal directional end of the battery cell from being deformed by welding in the first step welding region 150 and the second step welding region 190.

Additionally, in an embodiment, in the one-side sub-welding operation (S310), the other-side sub-welding operation (S320) and the main welding operation (S330), the laser may be continuously irradiated to the case 110. Additionally, in the one-side sub-welding operation (S310), the other-side sub-welding operation (S320), and the main welding operation (S330), a heat source (e.g., laser head) for welding the case 110 may be moved in a state of facing the case 110 and the laser may be simultaneously irradiated to the case 110.

Additionally, in an embodiment, one-side end and the other-side end of the case 110 may be welded respectively with the first heat input and the second heat input. In this case, the back beads 151 and 191 may be formed on the inner surface of the case 110 in the one-side end and the other-side end of the case 110, but the bead patterns 152 and 192 may not be generated in regions corresponding to the ends of the back beads 151 and 191 or regions corresponding to the one-side end and the other-side end of the case 110.

Additionally, in some embodiments of the disclosed technology, while the first step welding region 150 welded first is cooling, the second step welding region 190 spaced from the first step welding region 150 may be welded, thereby shortening the process waiting time.

Then, the main welding operation (S330) may be performed from a -Y-directional end of the first step welding region in the -Y-direction. Accordingly, a space between the first step welding region and the second step welding region 190 may be the main welding region 160, and according to the welding direction of the main welding operation (S330), the time at which the second step welding region 190 is cooled may be secured. Accordingly, an overall quality of the welding region (WA) may be improved.

Only specific examples of implementations of certain embodiments are described. Variations, improvements and enhancements of the disclosed embodiments and other embodiments may be made based on the disclosure of this patent document.

The disclosed technology also relates to the following aspects.

Aspect 1) A battery cell, comprising: a case including a first open region, a second open region facing the first open region at least one step region connected to at least one of the first open region and the second open region, and a receiving region connected to the at least one step region; and an electrode assembly disposed in the receiving region, the electrode assembly including: a positive electrode plate; a negative electrode plate; a separator disposed between the positive electrode plate and the negative electrode plate; a plurality of cap plates arranged to cover the first open region and the second open region; at least one step welding region formed in the at least one step region; and a main welding region connected to the at least one step welding region and formed in the receiving region, wherein the receiving region has a first thickness and the at least one step region has a second thickness, wherein the first thickness is greater than the second thickness.

Aspect 2) In aspect 1, wherein the case is formed by bending a single plate formed of a metal material, and one end of the single plate is in contact with another end of the single plate and welded together in the at least one step welding region and the main welding region.

Aspect 3) In aspect 1 or 2, wherein the at least one step welding region and the main welding region are formed on one surface of a plurality of surfaces of the case.

Aspect 4) In any one of aspects 1 to 3, wherein the plurality of cap plates includes: a first cap plate structured to cover the first open region; and a second cap plate structured to cover the second open region, wherein the at least one step region includes: a first step region connected to the first open region and extending from the first open region to a predetermined section in a direction toward the electrode assembly; and a second step region connected to the second open region and extending from the second open region to a predetermined section in the direction toward the electrode assembly.

Aspect 5) In aspect 4, wherein the at least one step welding region includes: a first step welding region formed in the first step region; and a second step welding region formed in the second step region, wherein the main welding region is connected to the first step welding region and the second step welding region, and is disposed between the first step welding region and the second step welding region.

Aspect 6) In ant one of aspects 1 to 5, wherein at least one back bead formed in the at least one step welding region protrudes in an extension line extending from an inner surface of the case in the receiving region toward the at least one step region, wherein a protrusion height of the at least one back bead is greater than 0 um and less than or equal to 90 µm.

Aspect 7) In ant one of aspects 1 to 6, wherein at least one of the at least one step welding region and the main welding region is welded using a laser.

Aspect 8) In ant one of aspects 1 to 7, wherein the second thickness is at least 80% and less than 100% of the first thickness, and a length of the at least one step region measured in a direction extending from an end of the case to the electrode assembly is at least 200% and at most 400% of the first thickness.

Aspect 9) In ant one of aspects 1 to 8, wherein the at least one step welding region include a plurality of step welding regions, wherein the plurality of step welding regions include a plurality of back beads formed in the plurality of step welding regions and a main welding region disposed between the plurality of step welding regions, and

wherein the plurality of back beads has a shape inverted with respect to the main welding region.

Aspect 10) In aspect 9, wherein the plurality of back beads includes a bead pattern formed by melting the case, wherein the bead pattern is formed in a region excluding an end of the case, within the plurality of step welding regions.

Aspect 11) In aspect 9 or 10, wherein the plurality of back beads protrude in an extension line in which an inner surface of the case in the receiving region extends toward the step region.

Aspect 12) A manufacturing method of a battery cell case, the method comprising: performing a first welding by irradiating a laser with a first heat input to a first region having a predetermined length in a first direction from a first end of a metal plate toward a second end of the plate opposite to the first end of the metal plate; performing a second welding by other-side sub- irradiating a laser with a second heat input to a second region having a predetermined length in a second direction from the second end of the metal plate to the first end of the metal plate; and performing a third welding by irradiating a laser with a third heat input to a connection region configured to connect the first and second ends of the metal plate and having a thickness greater than a thickness of the first end and a thickness of the second end, wherein performing the first welding includes irradiating the laser in the first direction.

Aspect 13) In aspect 12, wherein performing the second welding includes irradiating the laser in the second direction, wherein performing the third welding includes irradiating the laser in the first direction.

Aspect 14) In aspect 12 or 13, wherein at least one of the first heat input and the second heat input is between 40% and 60% of the third heat input.

Aspect 15) In any one of aspects 12 or 14, wherein the third welding is performed after the first welding and the second welding are performed, and wherein the first welding is performed before the second welding is performed.

## Claims

1. A battery cell, comprising:
a case including a first open region, a second open region facing the first open region, at least one step region connected to at least one of the first open region or the second open region, and a receiving region connected to the at least one step region; and
an electrode assembly disposed in the receiving region, the electrode assembly including:
a positive electrode plate;
a negative electrode plate;
a separator disposed between the positive electrode plate and the negative electrode plate;
a plurality of cap plates arranged to cover the first open region and the second open region;
at least one step welding region formed in the at least one step region; and
a main welding region connected to the at least one step welding region and formed in the receiving region,
wherein the receiving region has a first thickness and the at least one step region has a second thickness, wherein the first thickness is greater than the second thickness.

2. The battery cell of claim 1,
wherein the case is formed by bending a single plate formed of a metal material, and
one end of the single plate is in contact with another end of the single plate and welded together in the at least one step welding region and the main welding region.

3. The battery cell of claim 1 or 2,
wherein the at least one step welding region and the main welding region are formed on one surface of a plurality of surfaces of the case.

4. The battery cell any one of claims 1 to 3, wherein the plurality of cap plates includes:
a first cap plate structured to cover the first open region; and
a second cap plate structured to cover the second open region,
wherein the at least one step region includes:
a first step region connected to the first open region and extending from the first open region to a predetermined section in a direction toward the electrode assembly; and
a second step region connected to the second open region and extending from the second open region to a predetermined section in the direction toward the electrode assembly.

5. The battery cell of claim 4,
wherein the at least one step welding region includes:
a first step welding region formed in the first step region; and
a second step welding region formed in the second step region,
wherein the main welding region is connected to the first step welding region and the second step welding region, and is disposed between the first step welding region and the second step welding region.

6. The battery cell any one of claims 1 to 5,
wherein at least one back bead formed in the at least one step welding region protrudes in an extension line extending from an inner surface of the case in the receiving region toward the at least one step region,
wherein a protrusion height of the at least one back bead is greater than 0 um and less than or equal to 90 µm.

7. The battery cell any one of claims 1 to 6,
wherein at least one of the at least one step welding region and the main welding region is welded using a laser.

8. The battery cell any one of claims 1 to 7,
wherein the second thickness is at least 80% and less than 100% of the first thickness, and
a length of the at least one step region measured in a direction extending from an end of the case to the electrode assembly is at least 200% and at most 400% of the first thickness.

9. The battery cell any one of claims 1 to 8, wherein the at least one step welding region include a plurality of step welding regions,
wherein the plurality of step welding regions include each of a plurality of back beads formed in the plurality of step welding regions and a main welding region disposed between the plurality of step welding regions, and
wherein the plurality of back beads has a shape inverted with respect to the main welding region.

10. The battery cell of claim 9,
wherein the plurality of back beads includes a bead pattern formed by melting the case,
wherein the bead pattern is formed in a region excluding an end of the case, within the plurality of step welding regions.

11. The battery cell of claim 9 or 10,
wherein the plurality of back beads protrude in an extension line in which an inner surface of the case in the receiving region extends toward the step region.

12. A manufacturing method of a battery cell case, the method comprising:
performing a first welding by irradiating a laser with a first heat input to a first region having a predetermined length in a first direction from a first end of a metal plate toward a second end of the plate opposite to the first end of the metal plate;
performing a second welding by other-side sub-irradiating a laser with a second heat input to a second region having a predetermined length in a second direction from the second end of the metal plate to the first end of the metal plate; and
performing a third welding by irradiating a laser with a third heat input to a connection region configured to connect the first and second ends of the metal plate and having a thickness greater than a thickness of the first end and a thickness of the second end,
wherein performing the first welding includes irradiating the laser in the first direction.

13. The manufacturing method of claim 12,
wherein performing the second welding includes irradiating the laser in the second direction,
wherein performing the third welding includes irradiating the laser in the first direction.

14. The manufacturing method of claim 12 or 13,
wherein at least one of the first heat input and the second heat input is between 40% and 60% of the third heat input.

15. The manufacturing method any one of claims 12 to 14,
wherein the third welding is performed after the first welding and the second welding are performed, and
wherein the first welding is performed before the second welding is performed.
